# EUROPÄISCHE PATENTSCHRIFT

(11) **EP 0 429 517 B1**
(45) Veröffentlichungstag und Bekanntmachung des Hinweises auf die Patenterteilung: **21.04.1993**
(21) Anmeldenummer: 89909567.3
(22) Anmeldetag: 12.08.1989
(51) Int. Cl.: B60K 41/16, F16H 47/04

(54) **EINRICHTUNG UND VERFAHREN ZUM BETRIEB EINER STUFENLOS VERSTELLBAREN ANTRIEBSEINHEIT EINES KRAFTFAHRZEUGS**
ARRANGEMENT AND PROCESS FOR OPERATING A CONTINUOUSLY VARIABLE DRIVE UNIT IN A MOTOR VEHICLE
AGENCEMENT ET PROCEDE POUR FAIRE FONCTIONNER UNE UNITE DE TRANSMISSION A VARIATION CONTINUE DANS UN VEHICULE A MOTEUR

(30) Priorität: 17.08.1988 DE 3827861
(43) Veröffentlichungstag der Anmeldung: 05.06.1991
(73) Patentinhaber: ZF FRIEDRICHSHAFEN Aktiengesellschaft, 88038 Friedrichshafen (DE)
(72) Erfinder: NIKOLAUS, Heinrich, D-8391 Tiefenbach (DE); PATON, Robert, D-8390 Passau (DE)
(86) Internationale Anmeldenummer: EP8900957
(87) Internationale Veröffentlichungsnummer: WO9002059

(56) Entgegenhaltungen:
- EP-A- 0 234 136
- DE-C- 3 512 523

## Beschreibung

Die Erfindung betrifft ein Verfahren zum Betrieb einer stufenlos verstellbaren Antriebseinheit für Kraftfahrzeuge mit einer regelbaren Brennkraftmaschine und einem hydrostatisch-mechanischen Leistungsverzweigungsgetriebe mit stufenlos veränderlichem Übersetzungsverhältnis nach dem Oberbegriff des Anspruchs 1.

Aus der Patentschrift DE-C-35 12 523 ist ein stufenlos einstellbares, leistungsverzweigendes Verbundlastschaltgetriebe mit Gruppenschaltungen bekannt. Das Getriebe besteht aus zwei Teilgetrieben. Das eine ist ein stufenlos einstellbares, leistungsverzweigendes Koppelgetriebe mit mehreren Wellen. Das andere Teilgetriebe ist ein Schaltgetriebe mit einer Ganggruppe und mehreren Gruppengängen, die auf die Hauptabtriebswelle wirken. Die beiden Koppelwellen treiben alternativ das Schaltgetriebe an. Die Gangschaltungen erfolgen bei Synchrondrehzahlen lastfrei und ohne Zugkraftunterbrechung. Das Getriebe wirkt wie ein stufenloses Getriebe mit großem Stellbereich und erlaubt in einem Fahrzeug das Betreiben der Brennkraftmaschine entlang der Kurve für minimalen Kraftstoffverbrauch und ermöglicht so Kraftstoffeinsparung.

Derartige hydrostatisch-mechanische Leistungsverzweigungsgetriebe für Kraftfahrzeuge sind in bestimmten Betriebszuständen mit besonders hohen Verlusten behaftet, da sich der Wirkungsgrad im hydrostatischen Zweig bei großem Fördervolumen zwischen Primäreinheit und Sekundäreinheit verschlechtert. Die bei großem Fördervolumen der Primäreinheit im hydrostatischen Zweig auftretenden hohe Drücke führen im Zusammenhang mit den von einer Brennkraftmaschine auf die Primäreinheit übertragenen hohen Drehzahlen zu hohen Verlusten, frühzeitigem Verschleiß und zu hoher Geräuschemission des Getriebes.

Da der Leistungsanteil des hydrostatischen Zweiges bei großem Fördervolumen der Primäreinheit im Verhältnis zur gesamten Leistung, die durch das Leistungsverzweigungsgetriebe fließt, groß ist, wirkt sich dessen schlechter Wirkungsgrad sehr nachteilig für den Gesamtwirkungsgrad des Leistungsverzweigungsgetriebes aus.

Bei Getrieben mit hydrostatisch-mechanischer Leistungsverzweigung über den gesamaten Fahrbereich tritt in der Regel während des Schaltvorgangs im mechanischen Zweig die Belastungskombination mit großem Fördervolumen der Primäreinheit und hohem Druck im hydrostatischen Zweig auf. Während eines Schaltvorgangs wird die Getriebeausgangswelle von einer der Koppelwellen des Koppelgetriebes getrennt und mit einer anderen Koppelwelle verbunden. Dieser Schaltvorgang erfolgt bei synchroner Drehzahl der beteiligten Koppelwellen. Die Koppelwellen sind über Kupplungen mit der Ausgangswelle des Getriebes verbunden, wobei Überschneidungen in der Kupplungsbetätigung während des Schaltvorganges auftreten, bei welchem ein starres Übersetzungsverhältnis zwischen hydrostatischem und mechanischem Getriebezweig besteht.

Der Betrieb des Leistungsverzweigungsgetriebes unter Last führt zu Leckageverlusten im hydrostatischen Zweig. Um diese Verluste zu kompensieren, muß ein verändertes Fördervolumen der Primäreinheit vorgegeben werden, um eine bestimmte Drehzahl der von der Sekundäreinheit getriebenen Eingangswellen des Koppelgetriebes zu erreichen, und demzufolge muß auch, um Synchrondrehzahl der zu schaltenden Koppelwellen zu erreichen, der Winkel der Schwenkscheibe der Primäreinheit im hydrostatischen Zweig je nach den an der Ausgangswelle des Getriebes anliegenden Drehmomenten unterschiedlich eingestellt werden.

Im Zug- bzw. Schubbetrieb der Antriebseinheit muß die Schwenkscheibe der Primäreinheit auf einen größeren bzw. kleineren Winkel eingestellt werden, um die Sekundäreinheit auf die zur Erreichung des Schaltpunkts nötige Drehzahl zu bringen.

Die Änderung der Getriebeübersetzung im mechanischen Zweig vor und nach dem Schaltvorgang bestimmt die Drehmomentdifferenz, die vor und nach dem Schaltvorgang auf den hydrostatischen Zweig wirkt. Wird der Winkel der Schwenkscheibe der Primäreinheit, mit dem ein Schaltpunkt unter Last erreicht wird, nach vollzogener Schaltung beibehalten, entspricht das Fördervolumen der Primäreinheit nicht dem Fördervolumen, das für das neu übertragene Drehmoment nötig ist. Der unterschiedliche Bedarf an Fördervolumen im hydrostatischen Zweig vor und nach dem Schaltpunkt führt bei Nichtberücksichtigung zu einem fühlbaren Ruck des mit der Antriebseinheit verbundenen Gesamtsystems, zu einem schlechteren Wirkungsgrad der Antriebseinheit und erhöhtem Verschleiß, insbesondere der Kupplungen im Leistungsverzweigungsgetriebe.

Aufgabe der Erfindung ist es, ein Verfahren zu schaffen, das den Wirkungsgrad eines Leistungsverzweigungsgetriebes im Bereich seiner Schaltpunkte verbessert und den Verschleiß mindert.

Diese Aufgabe wird erfindungsgemäß dadurch gelöst, daß eine Regeleinrichtung die Drehzahl n₁ der Brennkraftmaschine vor Erreichen eines Übersetzungsverhältnisses im Leistungsverzweigungsgetriebe, bei welchem die Sekundäreinheit maximale Drehzahl aufweist, auf eine niedrigere Drehzahl reduziert, und das Stellsignal für eine Schwenkscheibe der Primäreinheit derart ändert, daß bei fallender Drehzahl der Brennkraftmaschine annähernd konstante Drehzahl an einer Ausgangswelle des Getriebes erhalten bleibt, daß die Regeleinrichtung das Stellsignal für die Schwenkscheibe der Primäreinheit nach erreichtem Schaltpunkt um einen Wert verändert, der sich aus der Differenz des größten Stellsignals Iᵢₛₜ, einem vorgegebenen Stellsignal Iₛₒₗₗ und dem Verhältnis der Übersetzungen im mechanischen Zweig am Schaltpunkt errechnet und nach abgeschlossenem Schaltvorgang die Regeleinrichtung die Drehzahl der Brennkraftmaschine weiter absenkt und das Stellsignal für die Schwenkscheibe derart ändert, daß die Drehzahl der Ausgangswelle des Getriebes weiterhin annähernd konstant bleibt und anschließend die Drehzahl der Ausgangswelle des Getriebes bei konstanter Übersetzung des Getriebes durch Anheben der Drehzahl der Brennkraftmaschine verändert wird, bis die Drehzahl n₁ wieder erreicht ist und die weitere Änderung der Drehzahl der Ausgangswelle des Getriebes bei konstanter Drehzahl n₁ der Brennkraftmaschine durch Ändern der Übersetzung des Getriebes erfolgt.

Durch das erfindungsgemäße Verfahren zum Betrieb der Antriebseinheit wird der Vorteil erreicht, daß der schaltpunktnahe Betriebsbereich mit schlechtem Wirkungsgrad des Leistungsverzweigungsgetriebes in kurzer Zeit durchfahren wird bei insgesamt niedrigerer Eingangsdrehzahl von der Brennkraftmaschine, so daß die Verlustleistung und der Verschleiß des Leistungsverzweigungsgetriebes, insbesondere der Kupplungen, geringer werden.

Einen besonderen Anteil an der erfindungsgemäßen Verbesserung hat die Anpassung des Fördervolumens der Primäreinheit an das tatsächlich vor und nach dem Schaltpunkt am hydrostatischen Zweig anliegende Drehmoment.

Elektronische Regeleinrichtungen weisen ein besonders günstiges Preisleistungsverhältnis auf und ermöglichen in besonders vorteilhafter Weise die Kombination der erfindungsgemäßen Regelungsfunktion mit Fahrprogrammen.

Wird die Kraftmaschine in der Nähe von 90 % ihrer Eckleistung betrieben, führt die Regeleinrichtung den Schaltvorgang durch, wobei ein Absenken der Drehzahl der Brennkraftmaschine unterbleibt. Damit wird einer möglichen Drehzahldrückung und damit Leistungsverringerung der Brennkraftmaschine vorgebeugt.

Es ist vorteilhaft, daß die Regeleinrichtung bei 90 % des Stellsignals Iᵢₛₜ das Verfahren gemäß dem kennzeichnenden Teil des Hauptanspruches einleitet.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

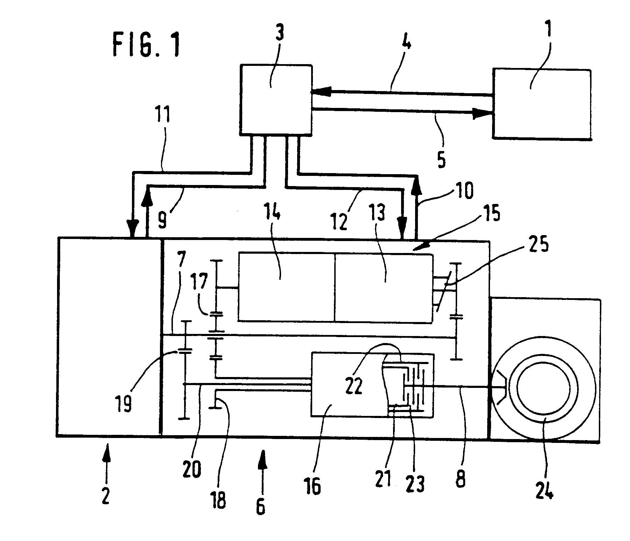

- Fig. 1: zeigt die erfindungsgemäße Einrichtung,
- Fig. 2: zeigt den Verlauf der Brennkraftmaschinendrehzahl und der Verstellung der Schwenkscheibe im Leistungsverzweigungsgetriebe in Abhängigkeit von der Zeit,
- Fig. 3: zeigt den tatsächlichen und den idealen Verlauf des Schwenkwinkels der Verstelleinheit im Hydrostaten über den gesamten Geschwindigkeitsbereich und die erfindungsgemäße Korrektur des Schwenkwinkels am Schaltpunkt aus errechneten Werten.

An einem Fahrschalter 1 wird eine frei wählbare Geschwindigkeit und ein Economy- oder Vollastprogramm zum Betrieb einer Brennkraftmaschine 2 bei Drehzahlen mit Verbrauchsbestwerten oder bei Nenndrehzahl voreingestellt. Eine Regeleinrichtung 3 tauscht über Leitungen 4, 5 elektrische Signale, zum Beispiel Vorgabe und Rückmeldung, mit dem Fahrschalter 1 aus. Eine stufenlos verstellbare Antriebseinheit besteht aus der regelbaren Brennkraftmaschine 2 herkömmlicher Bauart, die ein hydrostatisch-mechanisches Leistungsverzweigungsgetriebe 6 antreibt. Zwischen der Brennkraftmaschine 2 und dem Leistungsverzweigungsgetriebe 6 befindet sich keine schaltbare Kupplung. Die zum Beispiel elektronisch ausgebildete Regeleinrichtung 3 kontrolliert automatisch die Drehzahl der Brennkraftmaschine 2 und das Übersetzungsverhältnis des stufenlos verstellbaren hydrostatisch-mechanischen Leistungsverzweigungsgetriebes 6, so daß die vorgewählte Geschwindigkeit erreicht wird. Hierzu befinden sich nicht dargestellte Meßwertaufnehmer an einer motordrehzahlabhängig angetriebenen Eingangswelle 7 und an einer Getriebeausgangswelle 8, die die Wellendrehzahlen über Leitungen 9, 10 an die Regeleinrichtung 3 weitergeben. Die Regeleinrichtung 3 vergleicht die Drehzahlmeßwerte mit den Vorgaben vom Fahrschalter 1. In Abhängigkeit von in der Regeleinrichtung 3 gespeicherten Fahrprogrammen gehen von der Regeleinrichtung 3 Stellsignale über die Leitungen 11, 12 and die Kraftmaschine 2 und an das Leistungsverzweigungsgetriebe 6.

Die Brennkraftmaschine 2 wird in üblicher Weise durch Drosselung des Luftansaugquerschnittes oder der Brennstoffeinspritzmenge geregelt und vorwiegend bei konstanter Drehzahl, zum Beispiel der Drehzahl mit niedrigen Verbrauchswerten, betrieben.

Das Übersetzungsverhältnis des hydrostatischmechanischen Leistungsverzweigungsgetriebes 6 wird stufenlos verändert, indem das Fördervolumen einer Primäreinheit 13 und damit die Drehzahl einer Sekundäreinheit 14 eines hydrostatischen Zweiges 15 des Leistungsverzweigungsgetriebes 6 kontinuierlich beeinflußt wird. Die Primäreinheit 13 im hydrostatischen Getriebezweig 15 ist über die Eingangswelle 7 von der regelbaren Brennkraftmaschine 2 direkt angetrieben und dreht sich mit einer Drehzahl proportional zur Drehzahl der Brennkraftmaschine 2.

Der hydrostatische Getriebezweig 15 ist mit dem mechanischen Getriebezweig 16 über ein Vorgelege 17 und eine Hohlwelle 18 verbunden. Der kontinuierliche Übersetzungsbereich des hydrostatischen Getriebezweiges 15 im Leistungsverzweigungsgetriebe 6 wird durch Getriebeelemente, zum Beispiel Planetengetriebe im mechanischen Getriebezweig 16 des Leistungsverzweigungsgetriebes 6, vervielfacht.

Die Brennkraftmaschine 2 treibt über ein Vorgelege 19 und eine Antriebswelle 20 den mechanischen Getriebezweig 16 an, der mindestens ein Koppelgetriebe (nicht dargestellt) enthält. Koppelwellen 21, 22 der Koppelgetriebe sind angetrieben mit stufenlos variablen Drehzahlen, die sich aus der Summierung der stufenlos variablen Drehzahlen der Sekundäreinheit 14 und der konstanten Drehzahl der Welle 20 ergeben. Kupplungen 23 verbinden wahlweise eine der Koppelwellen 21 oder 22 mit der Getriebeausgangswelle 8, die eine Hinterachse 24 antreibt. Während des Schalvorgangs sind zumindest für eine kurze Zeit beide Koppelwellen 21 und 22 über die Kupplung 23 mit der Getriebeausgangswelle 8 verbunden.

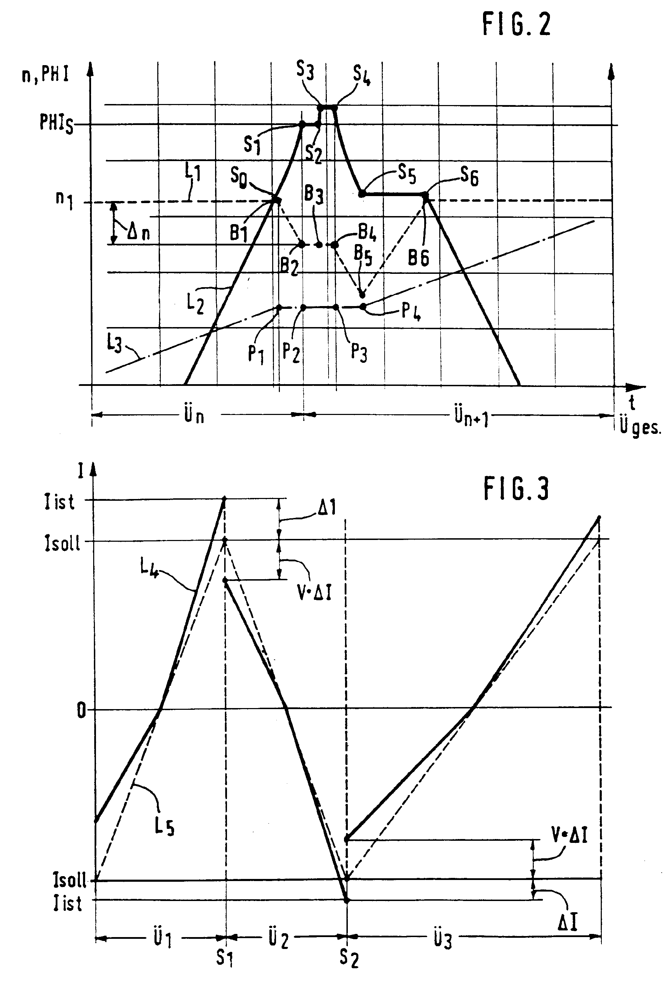

Fig. 2: Ansteuern eines Schaltpunkts gemäß der Erfindung. die Brennkraftmaschine 2 der Antriebseinheit läuft vorwiegend mit konstanter Drehzahl nₘₒₜ = n₁ entsprechend Linie L1. Die vorgewählte Geschwindigkeit wird durch Änderung des Übersetzungsverhältnis (Linie L2) des Leistungsverzweigungsgetriebes 6 erreicht. Die Linie L3 charakterisiert den Drehzahlverlauf an der Getriebeausgangswelle 8. Im mechanischen Getriebezweig 16 ist im Fahrbereich die Übersetzung Üₙ = konstant. Zwischen den Schaltpunkten ändert sich das Übersetzungsverhältnis des Leistungsverzweigungsgetriebes 6 durch Verstellen der Schwenkscheibe 25 der Primäreinheit 13 im hydrostatischen Zweig 15 annähernd linear mit der Zeit t. In der Nähe eines Schaltpunktes des mechanischen Zweiges 16 des Leistungsverzweigungsgetriebes 6 bei einer Drehzahl der Ausgangswelle 8 des Getriebes 6 von zum Beispiel 90 % der Drehzahl am Schaltpunkt im mechanischen Zweig 16 wird das Stellsignal der Regeleinrichtung 3 für die Drehzahl n₁ der Brennkraftmaschine 2 um Δₙ abgesenkt, und gleichzeitig wird das Stellsignal für die Schwenkscheibe 25 der Primäreinheit 13 des hydrostatischen Zweigs 15 beschleunigt um eine zur Zeit quadratischen Funktion zum Auslenkungswinkel PHIₛ hin von S0 nach S1 verstellt. Bei S1 ist Synchrondrehzahl der Koppelwellen zweier benachbarter Fahrbereiche erreicht.

Die Stellsignale für Die Brennkraftmaschinen-Drehzahlabsenkung und die Verstellung der Schwenkscheibe 25 sind so aufeinander abgestimmt, daß die Drehzahl der Ausgangswelle 8 des Getriebes 6 annähernd konstant bleibt während dieses Vorgangs auf der Linie L3, P1-P2. Bei um Δₙ niedrigerer Drehzahl der Brennkraftmaschine 2 wird der Schaltpunkt S1 des Leistungsverzweigungsgetriebes 6 bei um Δ n mal einem getriebeabhängigen Faktor niedrigerer Synchrondrehzahl nₛ erreicht.

Die Koppelwelle 22 des nächsten Fahrbereiches mit der Übersetzung Üₙ₊₁ im mechanischen Zweig 16 wird über die Kupplung 23 am Punkt S1 zur Koppelwelle 21 zugeschaltet, und das Koppelgetriebe und damit das Getriebe 6 insgesamt laufen als starre Einheit um. In der ersten Phase des als starre Einheit um. In der ersten Phase des Schaltvorgangs bleibt die Drehzahl der Brennkraftmaschine 2 konstant, siehe Linie L1 B2-B3, die Übersetzung des Getriebes 6 Ü_{ges} = Üₙ = Üₙ₊₁ = konstant, siehe Linie L2, S1-S2, und die Regeleinrichtung 3 ermittelt einen Korrekturwert für die Verstellung der Schwenkscheibe 25 der Primäreinheit 13 gemäß dem Verfahren, das in Fig. 3 dargestellt ist.

Der Korrektur der Verstellung der Schwenkscheibe 25 von S2 nach S3 folgt eine weitere kurze Phase S3 nach S4 auf der Linie L3 während der weiterhin die Koppelwellen 21 und 22 beider Fahrbereiche gemeinsam in Verbindung mit der Hinterachse 24 sind. Die Drehzahl der Brennkraftmaschine 2 bleibt konstant, siehe Linie L1, B3-B4. Bei S4 wird die Koppelwelle 21 für der Fahrbereich mit der Übersetzung Üₙ im mechanischen Zweig 16 gelöst und die Schwenkscheibe 25 verstellt beschleunigt von S4 nach S5 mit einer zur Zeit quadratischen Funktion aus dem Bereich der größten Auslenkung der Schwenkscheibe zu einem kleineren Winkel PHI und größerer Übersetzung Ü_{ges} des Getriebes 6. Das beschleunigte Zurückschwenken der Schwenkscheibe 25 wird durch eine weiter abfallende Drehzahl der Brennkraftmaschine 2 unterstützt, siehe Linie L1 von B4-B5, so daß insgesamt die Drehzahl der Ausgangswelle 8 konstant bleibt, siehe Linie L3 von P3-P4. Hat die Auslenkung der Schwenkscheibe 25 der Primäreinheit 13 einen Winkel PHI in der Nähe des Auslenkungsmaximums erreicht, zum Beispiel 90 % der maximalen Auslenkung PHIₘₐₓ, wird die Schwenkscheibe 25 von S5 bis S6 auf der Linie L2 in dieser Position festgehalten, und die Drehzahl der Ausgangswelle 8 des Getriebes 6 steigt wieder an ab P4, siehe Linie L3, da die Drehzahl nₘₒₜ der Brennkraftmaschine 2 wieder auf das Niveau n₁ vor Beginn des Schalvorgangs von B5 nach B6 auf der Linie L1 angehoben wird.

Fig 3: Die durchgezogen Linie L4 zeigt das Stellsignal von der Regeleinrichtung 3, das zur Auslenkung der Schwenkscheibe 25 der Primäreinheit 13 proportional ist für ein Getriebe unter Last mit drei Fahrbereichen und den Übersetzungen Ü1, Ü2, Ü3 im mechanischen Zweig des Getriebes 6. Die gestrichelte Linie L5 zeigt den aus Prüfstandversuchen bekannten Verlauf des Stellsignals für die Schwenkscheibe 25 der Primäreinheit 13 bei lastfreiem Betrieb des Getriebes 6. In lastfreiem Betrieb werden die Schaltpunkte S1 und S2 bei einem Stellsignal Iₛₒₗₗ erreicht. Der Regeleinrichtung 3 ist das Stellsignal Iₛₒₗₗ fest vorgegeben, zum Beispiel einprogrammiert. Unter Last werden die Schaltpunkte S1 und S2 bei einem Stellsignal Iᵢₛₜ erreicht, das um Δ I von Iₛₒₗₗ abweicht. Die Differenz Δ I in den erforderlichen Stellsignalen ist auf die erhöhte Leckage im hydrostatischen Zweig 15 bei Betrieb unter Last zurückzuführen. Am Schaltpunkt bildet die Regeleinrichtung 3 die Differenz Δ I aus dem zuletzt an die Schwenkscheibe 25 ausgegebenen Stelllsignal Iᵢₛₜ und dem vorgegebenen Stellsignal Iₛₒₗₗ und errechnet einen Korrekturwert K. Der Betrag des unter Last erreichten Stellsignals Iᵢₛₜ wird um den Korrekturwert K verkleinert. Der Korrekturwert K = Δ I - V · Δ I, wobei V der Quotient aus den beiden Übersetzungen ist, zwischen denen geschaltet wird im mechanischen Zweig 16 des Getriebes 6.

### Bezugszeichen

- 1: Fahrschalter
- 2: Brennkraftmaschine
- 3: Regeleinrichtung
- 4: Leitung
- 5: Leitung
- 6: Leistungsverzweigungsgetriebe
- 7: Eingangswelle
- 8: Getriebeausgangswelle
- 9: Leitung
- 10: Leitung
- 11: Leitung
- 12: Leitung
- 13: Primäreinheit
- 14: Sekundäreinheit
- 15: hydrostatischer Zweig
- 16: mechanischer Getriebezweig
- 17: Vorgelege
- 18: Hohlwelle
- 19: Vorgelege
- 20: Antriebswelle
- 21: Koppelwelle
- 22: Kopelwelle
- 23: Kupplung
- 24: Hinterachse
- 25: Schwenkscheibe
- L1: Kennlinie Brennkraftmaschinendrehzahl
- L2: Kennlinie Schwenkscheibenverstellung
- L3: Drehzahl der Ausgangswelle des Getriebes 6
- L4: Stellsignal Schwenkscheibe unter Last
- L5: Stellsignal Schwenkscheibe lastfrei
- S1: Schaltpunkt Fahrbereich 1, 2
- S2: Schaltpunkt Fahrbereich 2, 3

### Formelzeichen

- I: = Steuerstrom für den Schwenkscheibenwinkel
- Iₛₒₗₗ: = Steuerstrom am Schalpunkt lastfrei
- I: = Iᵢₛₜ - Iₛₒₗₗ
- Iᵢₛₜ: = Steuerstrom am Schaltpunkt unter Last
- Üₙ: = Übersetzung im Fahrbereich n
- Üₙ₊₁: = Übersetzung im Fahrbereich n+1
- V: = Üₙ₊₁/Üₙ
- PHI: = Schwenkscheibenwinkel
- PHIₛ: = Schwenkscheibenwinkel bei Synchrondrehzahl
- n: = Drehzahl
- n₁: = Dauerbetriebsdrehzahl Brennkraftmaschine
- Δₙ: = Drehzahlreduktion
- nₛ: = Synchrondrehzahl
- Ü_{ges}: = Übersetzung des gesamten Getriebes
- K: = Korrekturwert = Δ I + V · Δ I
- S₁: = Schaltpunkt 1
- S₂: = Schaltpunkt 2

## Patentansprüche

1. Verfahren zum Betrieb einer stufenlos verstellbaren Antriebseinheit eines Kraftfahrzeugs mit einer regelbaren Brennkraftmaschine (2) und einem hydrostatisch-mechanischen Leistungsverzweigungsgetriebe (6) mit stufenlos veränderlichem Übersetzungsverhältnis, wobei der mechanische Zweig (16) des hydrostatisch-mechanischen Leistungsverzweigungsgetriebes (6) mehrere Übersetzungsverhältnisse und der hydrostatische Zweig (15) eine Primäreinheit (13) sowie eine Sekundäreinheit (14) mit veränderlicher Drehzahl zur kontinuierlichen Veränderung der Übersetzungsverhältnisse zwischen den Schaltpunkten des mechanischen Zweiges (16) aufweist, die Brennkraftmaschine (2) über dem gesamten Geschwindigkeitsbereich des Kraftfahrzeugs mit vorwiegend konstanter Drehzahl betrieben wird und die Geschwindigkeitsänderungen des Kraftfahrzeugs durch Änderung des Übersetzungsverhältnisses des Leistungsverzweigungsgetriebes (6) erzielt werden, dadurch **gekennzeichnet**, daß eine Regeleinrichtung (3) die Drehzahl (n₁) der Brennkraftmaschine (2) vor Erreichen eines Übersetzungsverhältnisses im Leistungsverzweigungsgetriebe (6), bei welchem die Sekundäreinheit (14) maximale Drehzahl aufweist, auf einen niedrigeren Wert reduziert und das Stellsignal für eine Schwenkscheibe (25) der Primäreinheit (13) derart ändert, daß bei fallender Drehzahl der Brennkraftmaschine (2) annähernd konstante Drehzahl an einer Ausgangswelle (8) des Getriebes (6) erhalten bleibt, daß die Regeleinrichtung (3) das Stellsignal für die Schwenkscheibe (25) der Primäreinheit (13) nach erreichtem Schaltpunkt um einen Wert verändert, der sich aus der Differenz des größten Stellsignals (Iᵢₛₜ), einem vorgegebenen Stellsignal (Iₛₒₗₗ) und dem Verhältnis der Übersetzungen im mechanischen Zweig (16) am Schaltpunkt errechnet und nach abgeschlossenem Schaltvorgang die Regeleinrichtung (3) die Drehzahl der Brennkraftmaschine (2) weiter absenkt und das Stellsignal für die Schwenkscheibe (25) derart ändert, daß die Drehzahl der Ausgangswelle (8) des Getriebes (6) annähernd konstant bleibt und anschließend die Drehzahl der Ausgangswelle (8) des Getriebes (6) bei konstanter Übersetzung des Getriebes (6) durch Anheben der Drehzahl der Brennkraftmaschine (2) verändert wird, bis die Drehzahl (n₁) wieder erreicht ist und die weitere Änderung der Drehzahl der Ausgangswelle (8) des Getriebes (6) bei konstanter Drehzahl (n₁) der Brennkraftmaschine (2) durch Ändern der Übersetzung des Getriebes (6) erfolgt.

2. Verfahren nach Anspruch 1, dadurch **gekennzeichnet**, daß eine elektronische Regeleinrichtung (3) die Brennkraftmaschine (2) und das Leistungsverzweigungsgetriebe (6) kontrolliert.

3. Verfahren nach Anspruch 1, dadurch **gekennzeichnet**, daß die Regeleinrichtung (3) den Schaltvorgang durchführt, ohne die Drehzahl der Brennkraftmaschine (2) abzusenken, wenn diese bei 90 % ihrer Eckleistung betrieben wird.

4. Verfahren nach Anspruch 1, dadurch **gekennzeichnet**, daß die Regeleinrichtung (3) bei 90 % des Stellsignals (Iᵢₛₜ) das Verfahren gemäß dem kennzeichnenden Teil des ersten Anspruches einleitet.

## Claims

1. Process for operating a continuously-variable drive unit in a motor vehicle with a controllable combustion engine (2) and a hydrostatic mechanical powersplit transmission (6) with an infinitely-variable reduction ratio, in which the mechanical branch (16) of the hydrostatic mechanical powersplit transmission (6) has several reduction ratios and the hydrostatic branch (15) has a primary unit (13) and a secondary unit (14) with variable speed for continuously changing the reduction ratios between the shift points of the mechanical branch (16), where the combustion engine (2) is operated at mainly constant speed over the entire speed range of the motor vehicle and the speed changes of that vehicle are achieved by changing the reduction ratios of the powersplit transmission (6), **characterised** in
that a control device (3) reduces speed (n1) of the combustion engine (2) to a lower value before reaching the speed reduction ratio in the powersplit transmission (6) at which the secondary unit (14) is run at maximum speed, and which changes the setting signal for a swash-plate (25) of the primary unit (13) in such a way that when the combustion engine (2) speed falls, the speed of the output shaft (8) of the transmission (6) is maintained, that the control device (3) changes the setting signal for the swash-plate (25) of the primary unit (13) after reaching the shift point by a value which is calculated at the shift point from the difference between the maximum setting value (I_{actual}), a preset setting signal (Iₙₒₘᵢₙₐₗ) and the reduction ratios available in the mechanical branch (16), that the control device (3) continues to reduce the speed of the combustion engine (2) even more after the shifting process has been finished and changes the setting singal for the swash-plate (25) in such a way that the speed of the output shaft (8) of the transmission (6) remains more or less constant, and that the speed of the output shaft (8) of the transmission (6) at a constant reduction ratio of the transmission (6) is changed by increasing the speed of the combustion engine (2) until speed (n1) is reached again and a further change of the speed on the output shaft (8) of the transmission (6) is obtained at constant speed (n1) of the combustion engine (2) by changing the reduction ratio of the transmission.

2. Process according to claim 1,
**characterised** in that an electronic control device (3) controls the combustion engine (2) and the powersplit transmission (6).

3. Process according to claim 1,
**characterised** in that the control device (3) carries out the shifting process without reducing the speed of the combustion engine (2) if it is operated at 90 % of its specific performance.

4. Process according to claim 1,
**characterised** in that the control device (3) initiates the process at 90 % of the setting signal (I_{actual}) according to the characteristic section of claim 1.

## Revendications

1. Procédé pour faire fonctionner une unité d'entraînement à variation continue d'un véhicule à moteur comportant un moteur réglable à combustion (2) et une transmission hydrostatique-mécanique (6) à dérivation de puissance et à rapport de transmission variable en continu, où la branche mécanique (16) de la transmission hydrostatique-mécanique à dérivation de puissance (6) comporte plusieurs rapports de transmission et la branche hydrostatique (15) comporte une unité primaire (13) et une unité secondaire (14) à vitesse variable pour faire varier en continu les rapports de transmission entre les points de commutation de la branche mécanique (16), et où le moteur à combustion (2) fonctionne à une vitesse constante de manière prépondérante sur tout le domaine des vitesses du véhicule, les variations de vitesse du véhicule étant obtenues par variation du rapport de transmission de la transmission à dérivation de puissance (6), **caracterisé** en ce qu'un dispositif de réglage (3), avant que la transmission à dérivation de puissance (6) atteigne un rapport de transmission où l'unité secondaire (14) présente sa vitesse maximale, réduit à une valeur inférieure la vitesse (n₁) du moteur à combustion (2) et change le signal de commande d'un plateau inclinable (25) de l'unité primaire (13) de manière à maintenir une vitesse approximativement constante d'un arbre de sortie (8) de la transmission (6) lors de la réduction de vitesse du moteur à combustion (2), en ce que le dispositif de réglage (3), une fois qu'un point de commutation est atteint, change le signal de commande du plateau inclinable (25) de l'unité primaire (13) à une valeur calculée d'après la différence avec le plus grand signal de commande (Iᵢₛₜ), un signal de commande prédéterminé (Iₛₒₗₗ) et le rapport entre les démultiplications dans la branche mécanique (169 au point de commutation et, après achèvement de la commutation, le dispositif de réglage (3) réduit encore la vitesse du moteur à combustion (2) et change le signal de commande du plateau inclinable (25) de telle manière que la vitesse de l'arbre de sortie (8) de la transmission (6) reste approximativement constante, et ensuite la vitesse de l'arbre de sortie (8) de la transmission (6) est modifiée par augmentation de la vitesse du moteur à combustion (2) pour un rapport constant de la transmission (6) jusqu'à ce que la vitesse (n₁) soit de nouveau atteinte, la suite de la variation de vitesse de l'arbre de sortie (8) de la transmission (6) s'effectuant à vitesse constante (n₁) du moteur à combustion (2), par variation du rapport de la transmission (6) .

2. Procédé selon la revendication 1, caractérisé en ce qu'un dispositif électronique de réglage (3) contrôle le moteur à combustion (2) et la transmission à dérivation de puissance (6)

3. Procédé selon la revendication 1, caractérisé en ce que le dispositif de réglage (3) opère la commutation sans réduire la vitesse du moteur à combustion (2) si celui-ci fonctionne à 90% de sa puissance de pointe.

4. Procédé selon la revendication 1, caractérisé en ce que le dispositif de réglage (3) engage le processus selon la partie caractérisante de la revendication 1 à une valeur de 90% du signal de commande (Iᵢₛₜ).
